**Europäisches Patentamt**

**European Patent Office**

**Office européen des brevets**

(11) Numéro de publication: **0 233 799 B1**

(12) **FASCICULE DE BREVET EUROPEEN**

(45) Date de publication du fascicule du brevet:
**29.11.89**

(21) Numéro de dépôt: **87400067.2**

(22) Date de dépôt: **14.01.87**

(51) Int. Cl.⁴: **B 23 Q 7/04,** B 23 Q 1/16

(54) Dispositif de mise à poste d'une pièce circulaire.

(30) Priorité: **17.01.86 FR 8600598**

(43) Date de publication de la demande:
**26.08.87 Bulletin 87/35**

(45) Mention de la délivrance du brevet:
**29.11.89 Bulletin 89/48**

(84) Etats contractants désignés:
**DE FR GB**

(56) Documents cités:
**DE-B- 1 237 005**
**FR-A- 2 335 306**
**US-A- 1 836 036**
**US-A- 2 421 548**
**US-A- 3 593 984**

(73) Titulaire: **SOCIETE NATIONALE D'ETUDE ET DE CONSTRUCTION DE MOTEURS D'AVIATION, "S.N.E.C.M.A.", 2, boulevard du Général Martial Valin, F-75015 Paris (FR)**

(72) Inventeur: **Vaerman, Jean, Fernand, 2, Allée des Perce-neige, F-77240 Vert Saint Denis (FR)**

(74) Mandataire: **Molnat, François, S.N.E.C.M.A. Service des Brevets Boîte Postale 81, F-91003 Evry Cédex (FR)**

## Description

La présente invention concerne les dispositifs de mise à poste d'une pièce circulaire depuis une position d'attente, par exemple une palette de transport vers une ou plusieurs positions de contrôle ou d'usinage de la pièce, angulairement décalées les unes par rapport aux autres.

Ces dispositifs trouvent une application avantageuse dans les opérations de contrôle de fabrication, par exemple dans des contrôles par ultra-sons de pièces préusinées, avant que ces pièces ne subissent des usinages de finition.

Dans les chaînes de fabrication actuelles, par exemple pour des pièces tournantes de turbomachines, telles que des disques de turbine ou de compresseurs, les disques préusinés subissent un contrôle de leurs différentes surfaces dans le but de détecter les défauts superficiels ou internes éventuels du matériau et de pouvoir déterminer la taille, la position, l'orientation et éventuellement la géométrie de ces défauts afin de pouvoir accepter ou rebuter la pièce si le ou les défauts constatés sont de nature rédhibitoire, par rapport au critère limite d'acceptation fixé.

Ces contrôles s'effectuent actuellement en présence d'un opérateur dont le rôle consiste à surveiller le bon fonctionnement de l'installation de contrôle mais surtout à effectuer manuellement certaines opérations de manutention de la pièce, telles que par exemple son retournement si deux surfaces opposées de celle-ci doivent être successivement présentées au balayage par le faisceau ultrasonore émis par le traducteur de contrôle.

Ces opérations manuelles peuvent constituer une rupture de chaîne dans des processus où toutes les opérations de contrôle en elles-même sont automatiques.

Pour rendre ces opérations plus faciles, on a imaginé dans le passé d'effectuer le retournement de la pièce en dehors de la cuve de contrôle à l'aide de moyens adaptés mais ceci nécessitait des opérations complexes puisqu'il fallait d'abord introduire la pièce sur un plateau de monte et baisse de la cuve, effectuer les opérations de contrôle sur la face supérieure de la pièce, reprendre la pièce au moyen d'un pont roulant pour l'extraire verticalement puis latéralement hors de la cuve pour la poser sur un support externe, la retourner puis la reprendre avec le pont roulant et la ramener à l'intérieur de la cuve sur le plateau où pouvait alors être effectuée la seconde opération de contrôle sur la face antérieurement inférieure de la pièce, maintenant disposée en position supérieure, la pièce étant retournée.

La présente invention vise à éviter le retournement total de la pièce à contrôler en permettant le contrôle tant de la face supérieure que de la face inférieure, du bord externe ou le cas échéant de l'alésage de la pièce au moyen d'un dispositif de mise à poste de la pièce comportant un cadre intermédiaire sur lequel est fixée la pièce, le cadre pouvant subir une rotation autour d'un axe horizontal d'environ 90° et possédant un dégagement autorisant l'approche vers la pièce d'un outil, d'un palpeur ou d'un traducteur pour les contrôles ultrasonores, dans toutes ses positions.

L'invention vise également à simplifier le processus de contrôle en évitant des opérations intermédiaires inutiles et à diminuer l'encombrement, le poids et le coût des dispositifs de contrôle.

Lorsqu'elle est appliquée à des opérations d'usinage et non de contrôle, l'invention vise à permettre des usinages sur deux faces opposées d'une pièce par un outil, par exemple de perçage, de fraisage ou de lamage sans opérations intermédiaire de retournement de la pièce par simple rotation du cadre qui la supporte.

L'invention a donc pour objet un dispositif de mise à poste d'une pièce circulaire depuis une palette de transport vers une ou plusieurs positions de contrôle de mesure ou d'usinage, angulairement décalées l'une par rapport à l'autre tel qu'il comporte en combinaison un dispositif de préhension à griffes radiales monté sur un portique éventuellement mobile selon deux directions horizontales orthogonales entre elles; un plateau horizontal équipé d'un cadre intermédiaire de support de pièce, ledit cadre possédant un dégagement pour l'approche vers la pièce d'un organe de contrôle ou d'usinage.

Le plateau est monté sur un arbre vertical de monte et baisse qui est mobile depuis une première position où le plateau équipé du cadre reçoit une palette chargée de la pièce vers une deuxième position supérieure où la pièce est prise par les griffes du dispositif de préhension, puis à nouveau vers la première position où la palette est retirée après dégagement latéral du portique portant antérieurement la pièce, ensuite vers la deuxième position où la pièce est posée sur le plateau, puis vers une troisième position où le cadre intermédiaire repose sur un berceau porté par un support fixe, le cadre étant alors désolidarisé du plateau qui est enfin amené vers une quatrième position inférieure de repos.

Le cadre intermédiaire comporte des premiers moyens radiaux de support, de centrage et de mise en rotation de la pièce sur le cadre, et des seconds moyens de fixation et de placage de la pièce sur le cadre, lesdits seconds moyens coopérant avec la face supérieure de la pièce.

Selon un mode avantageux de réalisation de l'invention, le cadre intermédiaire de support de pièce est constitué de trois traverses radiales angulairement espacées de 120° formant glissières pour les premiers moyens radiaux de support de la pièce, les extrémités externes des traverses étant solidaires de longerons formant trois côtés d'un rectangle, le quatrième côté sans longerons dégageant un secteur angulaire sensiblement égal à 120° laissé libre pour permettre l'accès à l'une ou l'autre des faces de la pièce posées sur le cadre par l'organe de contrôle ou d'usinage.

Selon une particularité de l'invention, les premiers moyens radiaux de support, de centrage et de mise en rotation de la pièce sont constitués par trois chariots mobiles radialement dans des glissières portées par les faces verticales des traverses du cadre, lesdits chariots portant chacun un galet mobile motorisé en rotation autour d'un axe orthogonal à la surface du cadre, tandis que les seconds moyens de fixation et de placage de la pièce sur le cadre sont constitués par deux bras dont une extrémité est articulée sur deux supports et dont l'autre extrémité vient s'appuyer par l'intermédiaire de galets libres sur la face supérieure de la pièce, sous l'action d'un vérin de commande.

Pour permettre la rotation du cadre supportant la pièce avec un débattement voisin de 90°, afin de pouvoir approcher l'outil ou le palpeur de la totalité du profil d'une section droite de la pièce, le cadre comporte deux pivots d'axes horizontaux disposés de part et d'autre du cadre sur une droite orthogonale à la bissectrice du secteur libre coopérant avec le berceau du support fixe pour permettre la rotation du cadre et de la pièce depuis une position horizontale jusqu'à une position verticale, et de façon préférentielle le support comporte au moins deux index de verrouillage du cadre dans au moins deux positions angulaires décalées l'une par rapport à l'autre.

D'autre particularités de l'invention ainsi que ses variantes et applications seront explicités dans le complément de description qui va suivre accompagné de planches de dessins montrant une application de l'invention à la mise en place de disques de rotors de turbomachine dans une cuve de contrôle à ultrasons, application en regard de laquelle l'invention va être explicitée sans que cela constitue une restriction au champ d'application de celle-ci.

Parmi ces planches:

— la figure 1 montre l'ensemble d'une cuve de contrôle par ultra sons incorporant le dispositif de mise à poste d'une pièce selon l'invention;

— la figure 2 montre le détail du plateau de chargement (fig. 2a) et du cadre intermédiaire (fig. 2b) ainsi que le plateau équipé du cadre (fig. 2c);

— la figure 3 montre le cadre seul avec les seconds moyens de fixation de la pièce, escamotés;

— la figure 4 représente le même cadre, supportant une pièce avec les premiers et les seconds moyens de fixation en action;

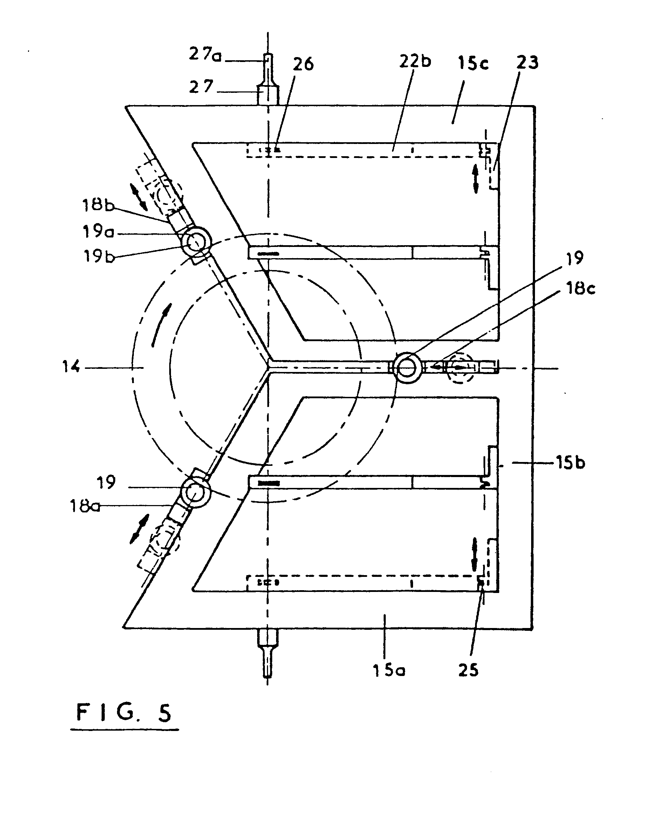

— la figure 5 montre le cadre portant la pièce, vu de dessus.

— les figures 6 à 15 montrent les étapes successives de la séquence de mise à poste d'une pièce.

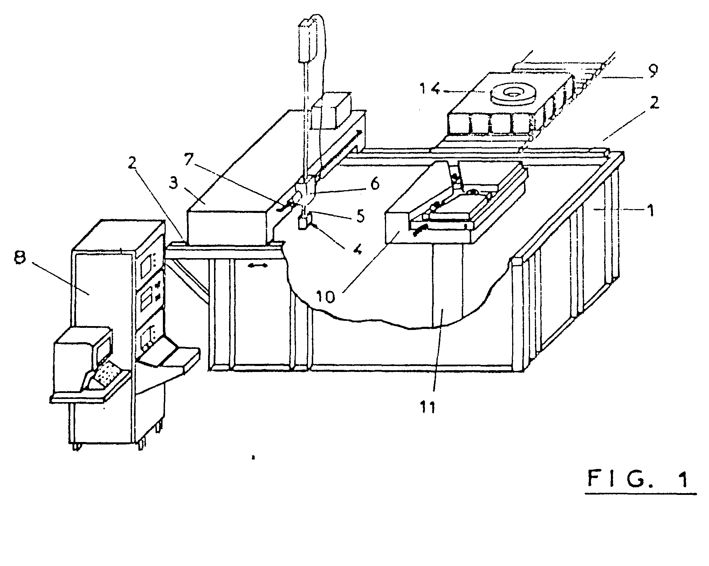

En regard de la figure 1, on a représenté une cuve de contrôle par ultra-sons 1 destinée à contenir la pièce immergée dans de l'eau. Sur deux bords parallèles supérieurs de la cuve 1 sont disposées des glissières 2 sur lesquelles peut circuler un portique 3 supportant un palpeur 4 monté mobile en rotation dans un plan vertical sur l'extrémité d'une colonne verticale 5 elle-même mobile en rotation et en translation verticale dans un chariot 6. Le chariot 6 est également mobile en translation horizontale le long d'une glissière 7 transversale du portique 3. Par les déplacements combinés du portique sur la cuve, de la colonne sur le portique, le palpeur 4 peut subir des déplacements dans tout le volume de la cuve 1.

Dans le cas ici représenté, le palpeur 4 est constitué par le traducteur du dispositif de contrôle par ultra-sons dont le générateur d'impulsions, son alimentation et un dispositif de commande, de calcul et de mémorisation sont contenus dans une baie 8 disposée à proximité de la cuve.

Dans d'autres applications, il est bien évident que le palpeur 4 peut être remplacé par d'autres organes d'outillage tels que par exemple une tête de fraisage ou de perçage.

Dans ces cas, la cuve est bien sûr supprimée et les glissières 2 sont portées par un chassis.

Selon l'invention, le dispositif de mise à poste de la pièce comporte d'abord un chemin à rouleaux horizontal d'amenée 9 situé au même niveau que les glissières supérieures 2, rouleaux sur lesquels on fait rouler les palettes supportant les pièces à contrôler. Le dispositif comporte également le plateau de monte et baisse 10 posé sur un arbre vertical 11 pouvant faire subir au plateau qui peut correspondre à différents niveaux situés au choix une translation verticale entre deux positions extrêmes, l'une inférieure où le plateau 10 est en position de repos, et l'autre supérieure où le plateau est en position pour permettre à un dispositif de préhension de saisir la pièce pour la soulever de sa palette, ainsi que cela sera vu plus loin.

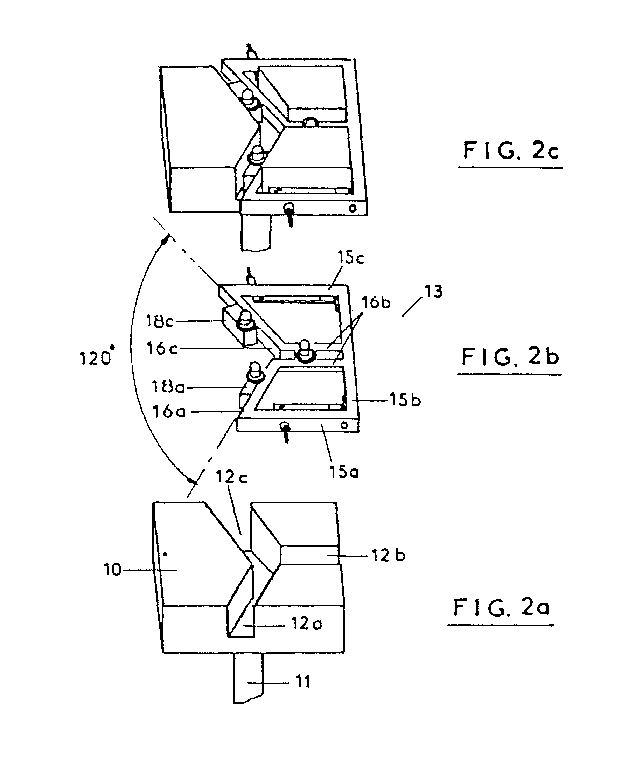

Le plateau 10 est de forme générale carrée selon le mode de réalisation présenté aux figures 2a à 2c. Il comporte en creux dans sa surface supérieure une empreinte 12 formée de trois gorges horizontales 12a, 12b, 12c, disposées selon trois axes angulairement espacés de 120° se rejoignant au centre du carré du plateau, et débouchant sur trois des faces latérales du plateau 10.

L'empreinte 12 est destinée à recevoir et à porter un cadre intermédiaire 13, représenté par la figure 2b, qui lui-même supportera le disque 14 à contrôler. Le cadre 13 est formé de trois longerons 15a, 15b, 15c soudés entre eux en forme de U, le longeron 15b formant la base du U. Trois traverses 16a, 16b, 16c, radiales angulairement espacées de 120° sont solidaires des longerons. Les traverses 16a, 16b, 16c, relient d'une part les extrémités de longerons 15a, 15c formant les branches du U à l'une des extrémités de la traverse 16b, l'autre extrémité de la traverse 16b étant soudée au longeron 15b.

Le cadre ainsi formé des trois longerons 15a, 15b, 15c et des trois traverses 16a, 16b, 16c forme donc un carré auquel manque le côté opposé au longeron 15b, dégageant ainsi un secteur angulaire de 120° (voir figure 2b) jusqu'au centre du cadre où se rejoignent les trois traverses, ledit secteur angulaire étant laissé libre pour l'approche ou la mise en contact du palpeur 4 avec l'une ou l'autre des faces du disque 14 qui sera posé sur le cadre.

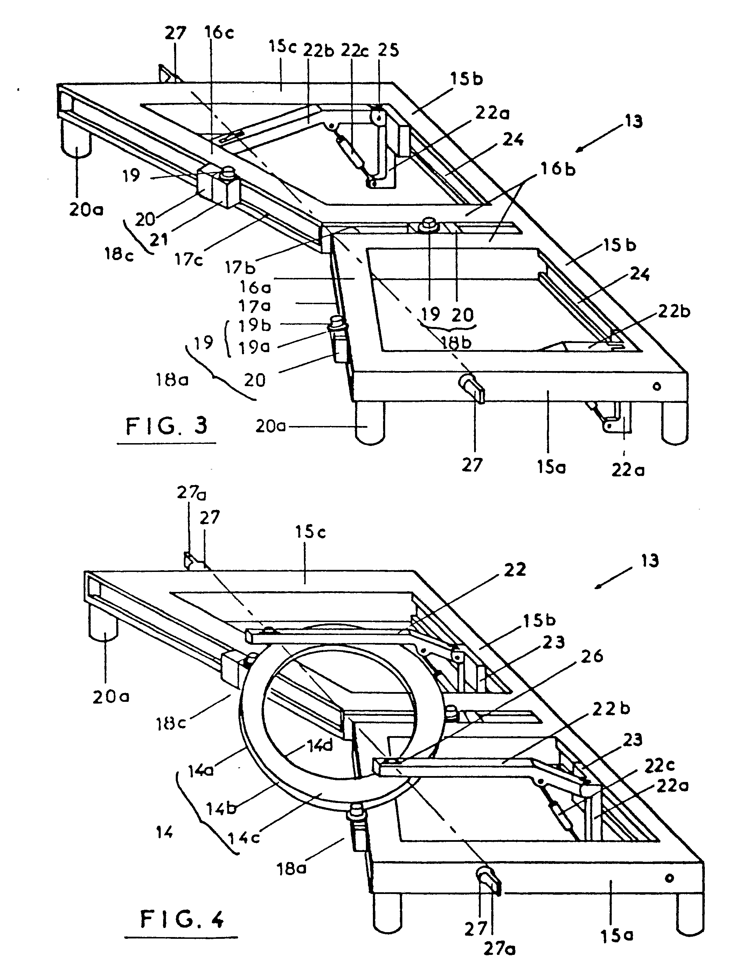

Comme illustré par la figure 3, les faces verticales des traverses 16a, 16b, et la face horizontale supérieure de la traverse 16c sont conformées de façon à réaliser des glissières 17a, 17b, 17c droites ou en queue d'aronde le long desquelles des chariots mobiles 18a, 18b, 18c munis de moteurs pas à pas 20 peuvent coulisser sous l'action desdits moteurs. Dans une variante, les moteurs 20 peuvent être supprimés et la motorisation des chariots dans les glissières être effectuée par des moteurs 20a portés par le cadre actionnant des vis d'entraînement non représentés.

Les trois chariots 18a, 18b, 18c sont déplaçables indépendamment l'un de l'autre et peuvent être verrouillés en une position donnée séparément l'un de l'autre par tout moyen connu, par exemple par des patins de blocage à l'intérieur de la glissière, ou des dispositifs à excentriques. Les chariots portent chacun sur leur face supérieure un galet 19 mobile en rotation autour d'axes orthogonaux à la surface du cadre. Les galets 19 comportent une portée externe annulaire horizontale 19a destinée à supporter le bord externe de la face inférieure 14a du disque à contrôler, et une seconde portée cylindrique de centrage et de serrage radial 19b coopérant avec le bord externe cylindrique 14b.

En faisant coulisser les chariots 18a, b, c, séparément, on permet d'assurer d'une part les centrage le plus correct possible du disque sur le cadre et d'autre part d'assurer le serrage du disque par les trois galets radiaux. D'autre par après verrouillage des chariots 18a, 18b, 18c, les galets 19 sont motorisés en rotation par des seconds moteurs pas à pas 21, ce qui permet d'assurer la rotation du disque 14 sur lui-même sur le cadre 13.

L'entraînement en rotation des galets peut aussi être réalisé à partir des moteurs 20a à l'aide d'un dispositif mécanique classique d'embrayage réversible qui libère la vis d'entraînement des chariots et embraye une barre de commande d'une pignonerie contenue dans lesdits chariots.

Les chariots 18 motorisés et munis de leurs galets 19 eux mêmes motorisés constituent donc les premiers moyens radiaux de support, de centrage et de mise en rotation de la pièce.

Des seconds moyens de fixation et de placage 22 de la pièce sur le cadre sont constituées par deux bras 22b coudés dont chaque base 22a est solidaire d'un coulisseau 23 mobile en translation dans une glissière 24 réalisée dans la face verticale intérieure du longeron 15b.

Le bras 22b du moyen 22 est articulé sur sa base 22a au moyen d'un axe 25 et peut être rendu mobile par un vérin de commande 22c disposé entre la base et le bras et relié hydrauliquement à une source de pression externe non représentée.

Les extrémités libres des bras 22b portent des galets fous 26 disposés de telle sorte qu'ils puissent tourner autour d'un axe géométriquement commun et passant par l'axe de rotation sur lui-même du disque.

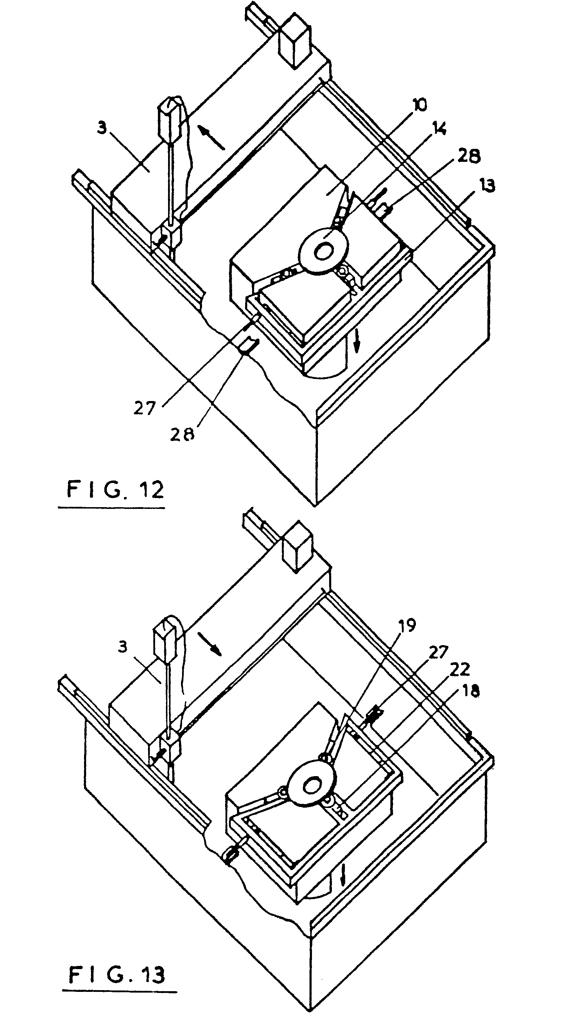

Les bras 22 étant montés sur des coulisseaux mobiles dans les glissières 24 peuvent être écartés et escamotés lors de la mise en place du disque sur le cadre puis relevés et enfin rapprochés l'un vers l'autre enfin on abaisse les bras 22b au moyen des vérins 22c jusqu'à ce que les galets 26 viennent s'appuyer sur la face supérieure 14c du disque, le maintenant ainsi plaqué sur le cadre 13. Les longerons 15a et 15c du cadre 13 comportent deux pivots 27 d'axes horizontaux perpendiculaires à la bissectrice du secteur libre de 120° du cadre et peuvent coopérer avec des berceaux 28 disposés comme indiqué sur la figure 12 à l'intérieur des deux faces opposées de la cuve 1 pour supporter le cadre 13 lorsqu'on descend le plateau de monte et baisse 10.

Les berceaux 28 comportent d'une part une portée semicylindrique permettant la rotation du cadre autour des pivots 27 et d'autre part des moyens d'entraînement en rotation, par exemple des gorges à bords parallèles coopérant avec un organe d'entrainement des pivots constitué par exemple par des méplats 27a des pivots.

Par l'intermédiaire de ces moyens de mise en rotation, le cadre 13 et le disque qu'il supporte peuvent être mis indifféremment en position horizontale ou verticale ou en toute position angulaire inclinée entre l'horizontale et la verticale.

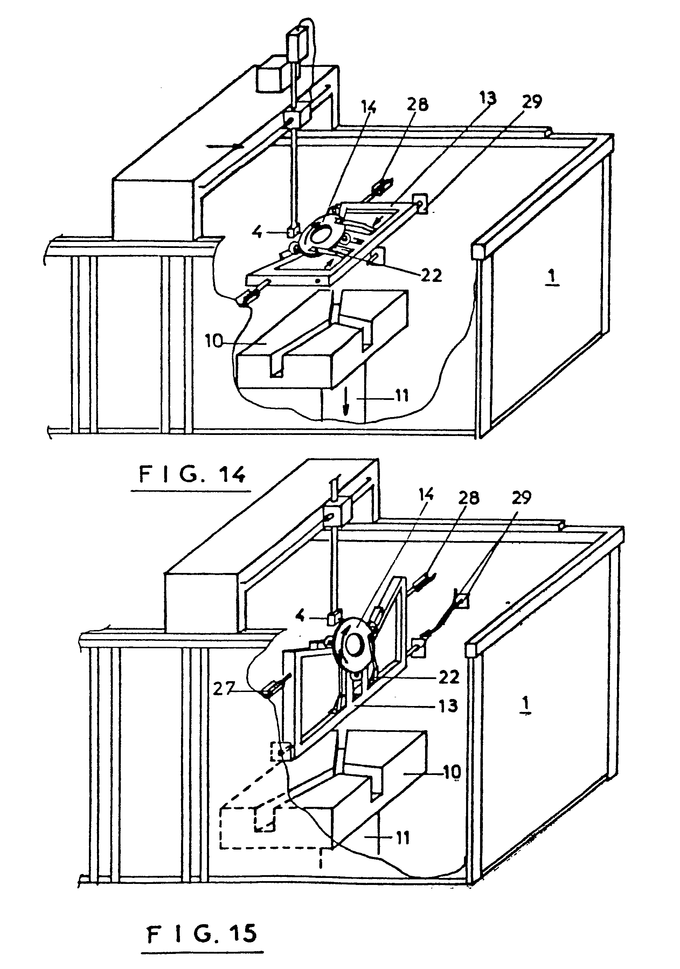

Des index de verrouillage 29 (voir figures 14 et 15) sont prévus dans une des faces de la cuve portant un des berceaux 28 pour maintenir dans l'une ou l'autre position inclinée ou horizontale ou verticale le cadre 13 et le disque qu'il supporte.

Les index 29 peuvent être remplacés par tout moyen équivalent réalisant un verrouillage par positions discrètes ou à des positions quelconques, ces moyens pouvant être constitués par exemple par des patins presseurs assurant un serrage entre la cuve et le cadre.

Les pivots 27 sont prévus de telle sorte que l'axe de rotation du cadre, qu'ils constituent passe par l'axe de la pièce et dans le plan vertical des axes des galets fous 26 de sorte que le disque peut être entraîné en rotation sur lui-même dans toutes les positions angulaires prise par le cadre afin que les faces supérieures 14c, inférieure 14a et latérale 14b et 14d du disque puissent être amenées par rotation du disque en porte à faux sur le secteur libre du cadre afin que chacune des faces précitées puisse être balayées par le faisceau ultrasonore du palpeur 4 à un moment ou à l'autre dans une des positions angulaires du cadre.

Ainsi, lorsque le cadre est horizontal, le palpeur peut être mis en regard soit de la face supérieure, soit de la faces latérales du disque, tandis qu'en position verticale du cadre, le palpeur peut être mis en regard soit de la face inférieure, soit des faces latérales du disque et ceci sans que le disque ait besoin d'être retourné sens dessus dessous par rapport au cadre.

Le dispositif selon l'invention comporte également un dispositif de préhension 30 à griffes radiales dont la structure peut être sensiblement équivalente à celle du cadre 13, les galets 19 étant alors remplacés par des griffes de préhension.

Ce dispositif 30 peut être porté par le portique 3 et à ce titre mobile longitudinalement et transversalement dans un plan horizontal, bien que cette mobilité ne soit pas indispensable à la mise en oeuvre de l'invention.

En se reportant aux figures 1 et 6 à 15, la séquence de mise à poste de la pièce (le disque 14) va être maintenant explicitée.

A la figure 1, un disque posé sur sa palette est amené par les rouleaux d'amenée 9 sur le plateau 10. Pour faciliter le roulage de la palette sur le plateau, on peut prévoir que les glissières supérieures de la cuve ainsi que la face supérieure du plateau porte également ment des rouleaux parallèles aux rouleaux d'amenée 9.

Le cadre 13 est posé dans le fond de l'empreinte 12 dont la hauteur est calculée de telle sorte que le sommet des galets 19 affleure la surface supérieure du plateau.

En outre les galets 19 sont radialement écartés. Pendant cette opération, les bras 22 sont également écartés et abaissés dans l'épaisseur du cadre 13 afin qu'ils ne gènent pas la mise en place de la palette.

Le dispositif de préhension, griffes écartées radia-

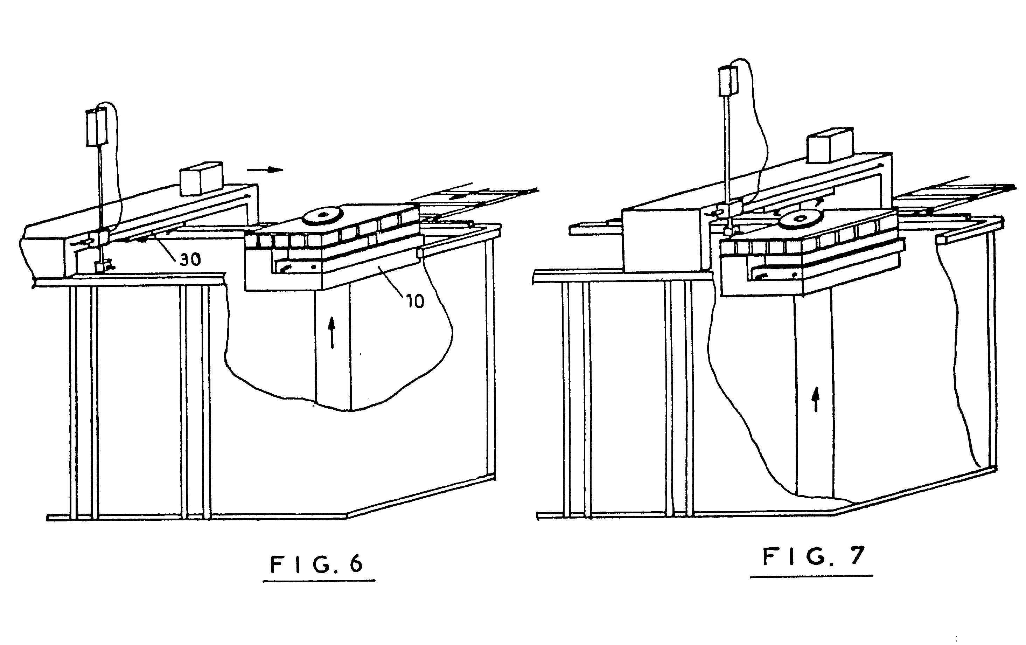

lement, est amené (figure 6) au dessus du plateau dans une position approximativement centrée par rapport au plateau (figure 7).

On monte ensuite le plateau 10 (figure 7) jusqu'à ce que les griffes du dispositif de préhension 30 soient en position pour être resserrées autour du disque.

Les griffes de préhension sont alors rapprochées de manière concentrique afin de réaliser la prise du disque.

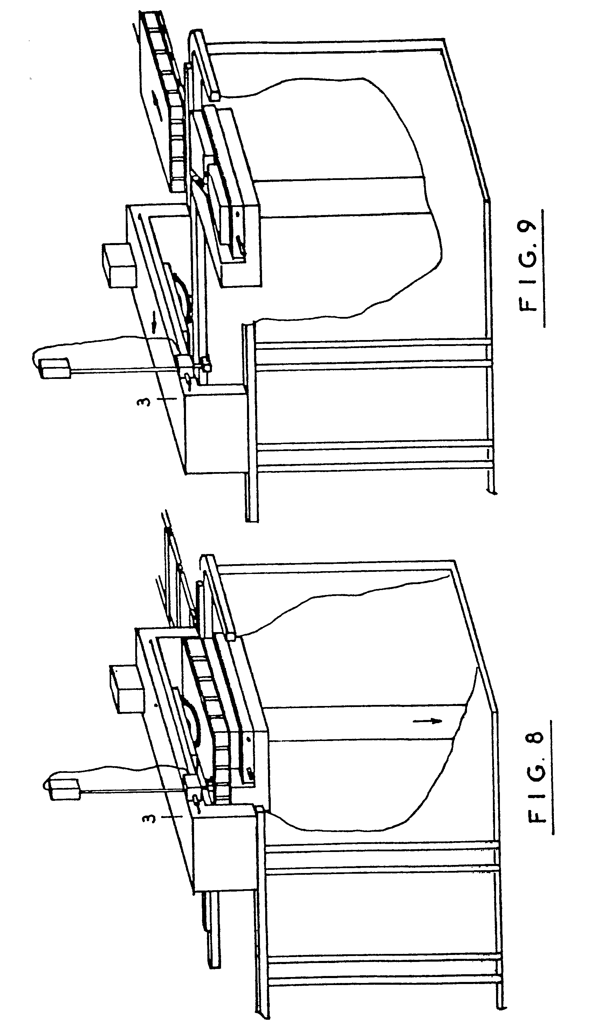

Le disque étant ainsi maintenu par le système de préhension, on abaisse le plateau 10 jusqu'à sa première position (figure 8) où, après dégagement du dispositif de préhension portant le disque, la palette peut être (figure 9) retirée par tout moyen (par exemple un bras robot) vers les rouleaux d'amenée 9.

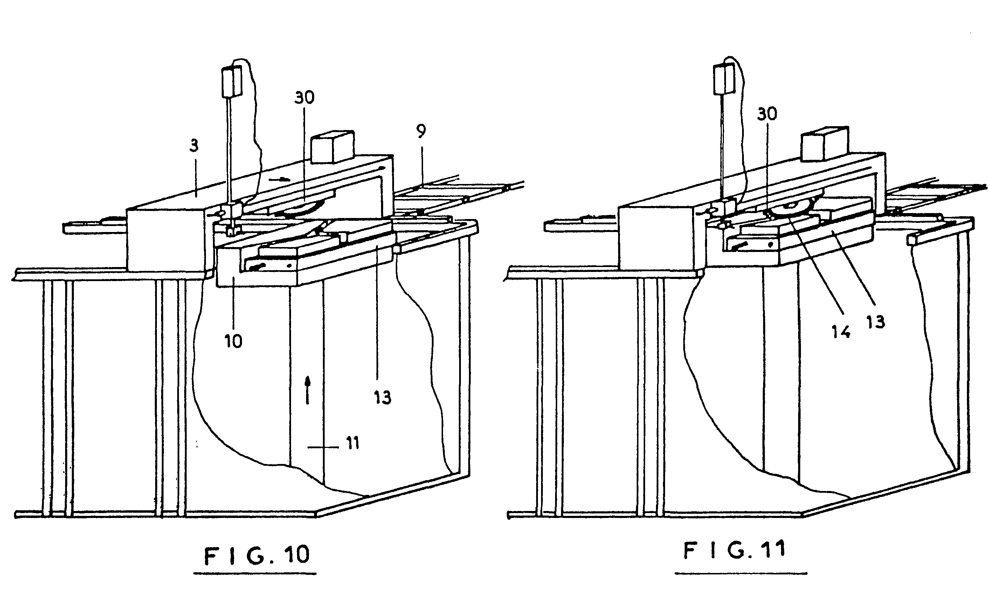

Le dispositif de préhension, portant le disque est ensuite ramené au droit du plateau (figure 10).

On remonte alors le plateau 10 jusqu'au contact de la face inférieure du disque (figure 11) est on desserre les griffes du dispositif 30. Le disque est alors posé sur la face supérieure du plateau 10.

Le plateau portant le disque est ensuite abaissé (figure 12). Pendant que le plateau descend et arrive à l'horizontale des berceaux 28 du support, on rapproche les chariots mobiles 18a, 18b, 18c, jusqu'à une position convenable et prédéterminée selon la géométrie du disque pour en permettre le serrage et l'entraînement ultérieur en rotation par contact à partir d'une surface latérale interne ou externe du disque.

Le cadre 13, qui a tendance à se soulever par rapport au plateau 10 pendant la descente de ce dernier et la mise en place du cadre sur les berceaux 28, voit ses galets 19 émerger de la surface supérieure du plateau pendant qu'ils continuent à se rapporcher du disque. L'opération de rapprochement des galets se termine (figures 13 et 14) lorsque le disque est supporté par les portées annulaires 19a des galets et que les portées cylindriques 19b sont en contact d'une des faces latérales externe 14b ou interne 14d du disque.

A ce moment là, le cadre 13 est totalement supporté par ses pivots 27 dans les berceaux 28 du support et le plateau 10 peut être abaissé vers sa position de repos (figure 14).

Les seconds moyens 22 de fixation et de placage du disque peuvent alors être mis en position de travail ainsi qu'il a été vu plus haut.

Le palpeur 4 qui pendant toutes les opérations antérieures était dégagé, peut alors être approché des faces latérales et supérieures du disque pour l'opération de contrôle desdites faces. Celle ci se déroule par rotation du disque sur lui-même au moyen des galets 19.

Pour l'opération de contrôle de la face inférieure 14a, on écarte d'abord le palpeur pour pouvoir opérer la rotation du cadre dans le berceau jusqu'à sa mise en position verticale (figure 15) où on le bloque au moyen d'un des index 29.

Le palpeur est alors approché de la face inférieure 14a au travers du secteur libre du cadre 13.

La totalité de la surface 14a peut être explorée puisque le disque maintenu par les galets et les bras 22 peur continuer sa rotation sur lui-même.

Une action conjugée et programmée du déplacement et de l'orientation du traducteur avec la rotation du cadre porte-pièce peut permettre avantageusement un suivi continu du profil et le contrôle de pièces de géométrie plus complexe.

Lorsque le contrôle est terminé, on effectue les opérations précitées de manutention dans l'ordre inverse de ce qui vient d'être vu afin de poser à nouveau le disque sur sa palette de transport.

Au moyen de l'invention, on peut donc automatiser complètement l'opération de contrôle, il suffit pour cela d'intégrer la commande des divers moteurs pas à pas, vérins et moyen de préhension dans un dispositif de commande unique, programmé selon la géométrie de la pièce à contrôler afin de réaliser séquentiellement toutes les opérations de manutention et de contrôle.

De plus, on supprime toute opération manuelle intermédiaire et le contrôleur peut occuper toute son activité à la partie noble du contrôle, à savoir l'interprétation des résultats, si l'acquisition et le traitement des signaux de contrôle ne permettent pas déjà un diagnostic et une sanction automatique.

Enfin l'invention peut s'appliquer non seulement à des opérations de contrôle mais également à des opérations de mesure avec ou sans contact ou d'usinage tel que par exemple de perçage, d'alésage, de traitement thermique localisé, de traitement de surface, etc... le banc et la cuve de mesure étant alors remplacés par une machineoutils adéquate.

L'invention s'applique donc également de façon générale à toute opération sur une pièce, nécessitant le défilement de la surface latérale totale de la pièce devant un dispositif de traitement avec ou sans contact.

## Revendications

1. Dispositif de mise à poste d'une pièce circulaire depuis une palette de transport vers une ou plusieurs positions de contrôle, de mesure ou d'usinage, angulairement décalées l'une par rapport à l'autre caractérisé en ce qu'il comporte en combinaison un dispositif de préhension à griffes radiales (30) monté sur un portique (3) éventuellement mobile selon deux directions horizontales orthogonales entre elles; un plateau horizontal (10) équipé d'un cadre intermédiaire (13) du support de pièce, ledit cadre possédant un dégagement pour l'approche vers la pièce d'un organe de contrôle ou d'usinage, ledit plateau étant monté sur un arbre vertical (11) de monte et baisse mobile depuis une première position où le plateau équipé du cadre reçoit une palette chargée de la pièce (14) vers une deuxième position supérieure où la pièce est maintenue par les griffes du dispositif de préhension (30), puis vers la première position où la palette est retirée, vers la deuxième position où la pièce est posée sur le plateau (10), puis vers une troisième position où le cadre intermédiaire (13) repose sur un berceau (28) porté par un support fixe, et enfin vers une quatrième position inférieure de repos du plateau où ledit plateau est désolidarisé du cadre, le cadre intermédiaire (13) comportant des premiers moyens radiaux (18, 19, 20, 21) de support, de centrage et de mise en rotation de la pièce sur le cadre, et des seconds moyens (22, 26) de fixation et de placage de la pièce sur le cadre, lesdits seconds moyens coopérant avec la face supérieure de la pièce.

2. Dispositif selon la revendication 1 caractérisé en ce que le cadre intermédiaire de support de pièce est constitué de trois traverses radiales (16a, 16b, 16c) angulairement espacées de 120° formant glissières pour les premiers moyens radiaux de support de la pièce, les extrémités externes des traverses étant solidaires de longerons (15a, 15b, 15c) formant trois côtés d'un rectangle, le quatrième côté sans longeron dégageant un secteur angulaire sensiblement égal à 120° laissé libre pour la mise en contact de l'une ou l'autre des faces de la pièce posée sur le cadre avec l'organe de contrôle ou d'usinage.

3. Dispositif selon la revendication 2 caractérisé en ce que les premiers moyens radiaux de support de centrage et de mise en rotation de la pièce sont constitués par trois chariots (18a, 18b, 18c) mobiles radialement dans des glissières (17a, 17b, 17c) portées par les faces verticales des traverses (16a, 16b, 16c) du cadre, lesdits chariots portant chacun un galet (19) mobile en rotation autour d'un axe orthogonal à la surface du cadre.

4. Dispositif selon la revendication 3, caractérisé en ce que chaque chariot (18a, 18b, 18c) mobile comporte des moyens indépendants (20) de déplacement le long de sa glissière et des moyens de blocage en position dans la glissière.

5. Dispositif selon l'une quelconque des revendications 3 ou 4, caractérisé en ce que chaque galet (19) des moyens radiaux de support comporte une première portée annulaire plane (19a), orthogonale à l'axe de rotation du galet, ladite portée supportant le bord externe de la face inférieure de la pièce et une seconde portée cylindrique (19b) de centrage et de serrage radial de la pièce coopérant avec le bord externe cylindrique de la pièce sous l'action des moyens de déplacement du chariot.

6. Dispositif selon la revendication 5, caractérisé en ce que les galets peuvent être rendus mobiles en rotation par trois moteurs pas à pas (21) commandés en synchronisme, pour entraîner la pièce en rotation sur le cadre intermédiaire.

7. Dispositif selon l'une quelconque des revendications 1 à 6, caractérisé en ce que les seconds moyens (22) de fixation et de placage de la pièce sur le cadre sont constitués par deux bras (22b) dont une extrémité est articulée sur deux coulisseaux (23) et dont l'autre extrémité vient s'appuyer sur la face supérieure de la pièce, sous l'action d'un vérin de commande (22c).

8. Dispositif selon la revendication 7, caractérisé en ce que les coulisseaux (23) des bras sont mobiles en translation dans une glissière (24) du longeron (15b) opposé au secteur libre du cadre, depuis une première position où ils sont écartés de la surface de la pièce, jusqu'à une seconde position où ils sont au dessus de la pièce.

9. Dispositif selon l'une quelconque des revendications 7 ou 8, caractérisé en ce que l'extrémité de chaque bras (22b) venant s'appuyer sur la face supérieure de la pièce est munie d'un galet fou (26), les deux galets étant diamétralement opposés à l'axe de rotation de la pièce lorsque les bras sont en appui sur celle-ci.

10. Dispositif selon l'une quelconque des revendications 1 à 9, caractérisé en ce que le plateau horizontal (10) comporte sur sa face supérieure une empreinte en creux (12a, 12b, 12c) coopérant avec la surface inférieure des longerons et des traverses du cadre pour positionner celui-ci sur le plateau, la profondeur de l'empreinte étant telle que la profondeur des galets affleure la surface supérieure du plateau.

11. Dispositif selon l'une quelconque des revendications 1 à 10 caractérisé en ce que le cadre (13) comporte deux pivots (27) d'axes horizontaux disposés de part et d'autre du cadre sur une droite orthogonale à la bissectrice du secteur libre, et coopérant avec le berceau (28) du support fixe pour permettre la rotation du cadre et de la pièce depuis une position horizontale jusqu'à une position verticale.

12. Dispositif selon la revendication 11, caractérisé en ce que le berceau (28) comporte des moyens d'entrainement en rotation coopérant avec au moins un organe d'entrainement (27a) des pivots du cadre.

13. Dispositif selon l'une quelconque des revendications 11 ou 12, caractérisé en ce que le support comporte au moins deux index (29) de verrouillage du cadre dans au moins deux positions angulaires décalées l'une par rapport à l'autre.

14. Dispositif selon l'une quelconque des revendications 1 à 13 caractérisé en ce qu'il comporte des moyens de commande conjuguées du déplacement et de l'orientation de l'organe de contrôle ou d'usinage d'une part, de l'orientation du cadre et de la rotation de la pièce sur le cadre d'autre par pour réaliser le suivi continu du profil de la pièce par l'organe de contrôle ou d'usinage.

**Patentansprüche**

1. Vorrichtung zum Verbringen eines kreisförmigen Werkstücks von einer Transportpalette zu einer oder mehreren, in ihrer Winkelposition gegeneinander versetzten Überwachungs-, Meß- oder Bearbeitungspositionen, gekennzeichnet durch die Kombination aus einer Greifvorrichtung mit radialen Greifern (30), die auf einer Brücke (3) montiert sind, die gegebenenfalls in zwei zueinander orthogonalen horizontalen Richtungen bewegbar ist, einem horizontalen Tisch (10), der mit einem Zwischenrahmen (13) zur Halterung des Werkstücks ausgestattet ist, wobei dieser Rahmen eine Vertiefung aufweist, die die Annäherung eines Prüf- oder Bearbeitungsorgans an das Werkstück ermöglicht, wobei der Tisch auf einer anhebbaren und absenkbaren vertikalen Welle (11) montiert ist, die bewegbar ist

— aus einer ersten Position, in der der mit dem Zwischenrahmen ausgestattete Tisch eine mit dem Werkstück (14) beladene Palette aufnimmt, in eine höhere zweite Position, in der das Werkstück von den Greifern der Greifvorrichtung (30) gehalten wird,

— sodann in Richtung auf die erste Position, in der die Palette zurückgezogen wird,

— in Richtung auf die zweite Position, in der das Werkstück auf den Tisch (10) gelegt wird,

— sodann in Richtung auf eine dritte Position, in der der Zwischenrahmen (13) auf einem von einem festen Träger getragenen Schlitten (28) ruht,

— und schließlich in Richtung auf eine vierte untere Ruheposition des Tischs, in der der Tisch von dem Zwischenrahmen gelöst ist, wobei der Zwischenrahmen (13) erste radiale Mittel (18, 19, 20, 21) zur Halterung, Zentrierung und zur Drehung des Werkstücks auf dem Rahmen aufweist sowie zweite Mittel (22, 26) zur Befestigung und zum Andrücken des Werkstücks auf den Rahmen, wobei diese zweiten Mittel mit der Oberseite des Werkstücks zusammenwirken.

2. Vorrichtung nach Anspruch 1, dadurch gekennzeichnet, daß der Zwischenrahmen zur Halterung des Werkstücks aus drei in Winkelabständen von 120° angeordneten radialen Traversen (16a, 16b, 16c) besteht, die Gleitbahnen für die ersten radialen Mittel zur Halterung des Werkstücks bilden, und daß die äußeren Enden dieser Traversen mit Längsträgern (15a, 15b, 15c) fest verbunden sind, die drei Seiten eines Rechtecks bilden, wobei die vierte Seite dieses Rechtecks, die keinen Längsträger aufweist, einen Winkelsektor von etwa 120° freiläßt, der es ermöglicht, die eine oder die andere Seite des auf den Zwischenrahmen aufgelegten Werkstücks mit dem Prüf- oder Bearbeitungsorgan in Kontak zu bringen.

3. Vorrichtung nach Anspruch 2, dadurch gekennzeichnet, daß die ersten radialen Mittel zur Halterung und Zentrierung und zur Drehung des Werkstücks aus drei Wagen (18a, 18b, 18c) bestehen, die radial in den von den vertikalen Seiten der Traversen (16a, 16b, 16c) des Zwischenrahmens getragenen Gleitbahnen (17a, 17b, 17c) bewegbar sind und die jeweils eine Rolle (19) tragen, die um eine zur Oberfläche des Rahmens orthogonale Achse drehbar ist.

4. Vorrichtung nach Anspruch 3, dadurch gekennzeichnet, daß die einzelnen Wagen (18a, 18b, 18c) unabhängige Mittel (20) zu ihrer Verschiebung längs der jeweiligen Gleitbahn sowie Mittel zur Blockierung in einer Position in der Gleitbahn haben.

5. Vorrichtung nach einem der Ansprüche 3 oder 4, dadurch gekennzeichnet, daß jede Rolle (19) der radialen Halterungsmittel eine erste ringförmige, zur Drehachse der Rolle orthogonale ebene Tragfläche (19a), die den äußeren Rand der Unterseite des Werkstücks trägt, sowie eine zweite zylindrische Tragfläche (19b) zum Zentrieren und zum radialen Einspannen des Werkstücks aufweist, die unter der Einwirkung von Mitteln zur Verschiebung des Wagens mit dem zylindrischen Außenrand des Werkstücks zusammenarbeiten.

6. Vorrichtung nach Anspruch 5, dadurch gekennzeichnet, daß die Rollen mit Hilfe dreier synchron gesteuerter Schrittmotoren (21) gedreht werden können, um das Werkstück auf dem Zwischenrahmen zu drehen.

7. Vorrichtung nach einem der Ansprüche 1 bis 6, dadurch gekennzeichnet, daß die zweiten Mittel (22) zum Befestigen und Andrücken des Werkstücks auf dem Rahmen aus zwei Armen (22b) bestehen, die mit einem Ende an zwei Schiebern (23) angelenkt sind und deren anderes Ende sich unter der Einwirkung eines Antriebszylinders (22c) auf der Oberseite des Werkstücks abstützt.

8. Vorrichtung nach Anspruch 7, dadurch gekennzeichnet, daß die Schieber (23) der Arme (22b) in einer Gleitbahn (24) des dem freien Sektor des Zwischenrahmens entgegengesetzten Trägers (15b) aus einer ersten Position, in der sie Abstand von der Oberfläche des Werkstücks haben, in eine zweite Position verschiebbar sind, in der sie sich über dem Werkstück befinden.

9. Vorrichtung nach einem der Ansprüche 7 oder 8, dadurch gekennzeichnet, daß dasjenige Ende jedes Arms (22b), das sich auf der Oberseite des Werkstücks abstützt, mit einer freilaufenden Rolle (26) ausgestattet ist, und daß die beiden Rollen relativ zur Drehachse des Werkstücks einander diametral gegenüberliegen, wenn die Arme sich auf dem Werkstück abstützen.

10. Vorrichtung nach einem der Ansprüche 1 bis 9, dadurch gekennzeichnet, daß der horizontale Tisch (10) auf seiner Oberseite eine Vertiefung (12a, 12b, 12c) aufweist, die mit der Unterseite der Träger und der Traversen des Zwischenrahmens zusammenwirkt, um diesen auf dem Tisch positionieren, wobei die Tiefe dieser Vertiefung so gewählt ist, daß die Tiefe der Rollen mit der Oberseite des Tischs glatt abschließt.

11. Vorrichtung nach einem der Ansprüche 1 bis 10, dadurch gekennzeichnet, daß der Zwischenrahmen (13) zwei Zapfen (27) mit horizontalen Achsen aufweist, die zu beiden Seiten des Zwischenrahmen auf einer zur Winkelhalbierenden des freien Sektors orthogonalen Geraden liegen und mit dem Schlitten (28) des festen Trägers zusammenwirken, um die Drehung des Zwischenrahmens und des Werkstücks aus einer horizontalen Position bis in eine vertikale Position zu ermöglichen.

12. Vorrichtung nach Anspruch 11, dadurch gekennzeichnet, daß der Schlitten (28) Mittel für den Drehantrieb aufweist, die mit wenigstens einem Organ (27a) für den Antrieb der Zapfen des Zwischenrahmens zusammenwirken.

13. Vorrichtung nach einem der Ansprüche 11 oder 12, dadurch gekennzeichnet, daß die Halterung wenigstens zwei Markierungen (29) zur Verriegelung des Rahmens in wenigstens zwei gegeneinander versetzten Winkelpositionen aufweist.

14. Vorrichtung nach einem der Ansprüche 1 bis 13, dadurch gekennzeichnet, daß für die Verschiebung und Ausrichtung des Prüf- und Steuerorgans einerseits und für die Ausrichtung des Rahmens und die Drehung des Werkstücks auf dem Rahmen andererseits konjugierte Steuermittel vorgesehen sind, die es dem Prüf- oder Bearbeitungsorgan ermöglichen, dem Profil des Werkstücks kontinuierlich zu folgen.

**Claims**

1. Means for moving a circular workpiece from a conveying pallet into one or more checking or measurement or machining positions angularly offset from one another, characterised in that they comprise in combination: gripping means having radial grippers (30) disposed on a gantry (3) which may be movable in two horizontal directions perpendicular to one another; a horizontal plate or tray or panel or the like (10) having an intermediate workpiece support frame (13) formed with a recess for the approach towards the workpiece of a checking or machining element, the tray (10) being disposed on a vertical shaft (11) adapted for vertical movement from a first position, in which the tray (10) having the frame (13) receives a pallet containing the workpiece (14), to a second and upper position in which the workpiece is retained by the grippers of the gripping means (30), then to the first position in which the pallet is withdrawn, to the second position, in which the workpiece is placed on the tray (10), then to a third position in which the intermediate frame (13) rests on a cradle (28) carried by a stationary support, and finally to a fourth inoperative bottom position of the tray (10) in which the same is disconnected from the frame (13), the same having first radial means (18 - 21) for supporting, centring and rotating the workpiece on the frame (13) and second means (22, 26) for securing and locating the workpiece on the frame (13), the second means co-operating with the workpiece top surface.

2. Means according to claim 1, characterised in that the intermediate frame (13) comprises three radial cross-members (16a, 16b, 16c) which are offset angularly by 120° from one another and which are effective as slideways for the first radial workpiece-supporting means, the outer ends of the cross-members (16a, 16b, 16c) being rigidly secured to longitudinal members (15a, 15b, 15c) forming three sides of a rectangle, the fourth side without longitudinal member leaving clear an angular sector of substantially 120° to enable one or other of the surfaces of the workpiece on the frame to contact the inspecting or machining element.

3. Means according to claim 2, characterised in that the first radial means for supporting, centring and rotating the workpiece take the form of three slides (18a, 18b, 18c) adapted to move radially in slideways (17a, 17b, 17c) borne by the vertical surfaces of the frame cross-members (16a, 16b, 16c), the slides (18a, 18b, 18c) each having a roller (19) rotatable around an axis perpendicular to the frame surface.

4. Means according to claim 3, characterised in that each slide (18a, 18b, 18c) has independent means (20) for moving it along its slideway and means for securing it in position thereon.

5. Means according to claim 3 or 4, characterised in that each roller (19) of the radial support means has: a plane annular first bearing surface (19a) perpendicular to the roller rotational axis and supporting the outside edge of the bottom surface of the workpiece; and a cylindrical second bearing surface (19b) for centring and radial clamping of the workpiece and co-operating with the cylindrical outer edge thereof under the control of the carriage-displacing means.

6. Means according to claim 5, characterised in that the rollers can be rotated by three synchronously controlled stepping motors (21) to rotate the workpiece on the intermediate frame.

7. Means according to any of claims 1 - 6, characterised in that the second means (22) for securing and positioning the workpiece on the frame take the form of two arms (22b), one end of which is pivoted to two sliders (23) while the other end bears on the top surface of the workpiece under the control of an actuator (22c).

8. Means according to claim 7, characterised in that the sliders (23) are displaceable in a slideway (24) of the longitudinal member (15b) opposite the open sector of the frame from a first position in which they are out of engagement with the workpiece surface into a second position in which they are above the workpiece.

9. Means according to claim 7 or 8, characterised in that the end of each arm (22b) bearing on the top surface of the workpiece has an idle roller (26), the two rollers being diametrically opposite the rotational axis of the workpiece when the arms are bearing thereon.

10. Means according to any of claims 1 - 9, characterised in that the horizontal tray (10) is formed on its top surface with an impression (12a, 12b, 12c) co-operating with the bottom surface of the frame longitudinal and transverse members to position the frame on the tray, the depth of the impression being such that the depth of the rollers is flush with the top surface of the tray.

11. Means according to any of claims 1 - 10, characterised in that the frame (13) has two pivots (27) whose axes are horizontal and which are disposed on either side of the frame on a straight line perpendicular to the bisector of the free sector and co-operating with the cradle (28) of the stationary support to enable the frame and workpiece to be rotated from a horizontal position into a vertical position.

12. Means according to claim 11, characterised in that the cradle (28) has rotation-producing means co-operating with at least one element (27a) for driving the frame pivots.

13. Means according to claim 11 or 12, characterised in that the support comprises at least two fingers (29) for locking the frame in at least two angular positions offset from one another.

14. Means according to any of claims 1 - 13, characterised in that it comprises combined control means for moving and orienting the inspection or machining element, orienting the frame and rotating the workpiece thereon to provide continuous follow-up of the workpiece cross-section by the inspection or machining element.

F I G. 1

EP 0 233 799 B1

FIG. 2c

15c

16b

13

18c

16c

FIG. 2b

120°

18a

16a

15b

15a

12c

10

12b

12a

FIG. 2a

11

11

FIG. 3

FIG. 4

F I G. 5

FIG. 7

FIG. 6

F I G. 9

F I G. 8

F I G. 10

F I G. 11

EP 0 233 799 B1

F I G. 12

F I G. 13

F I G. 14

F I G. 15